# EUROPEAN PATENT APPLICATION

(11) **EP 1 170 688 A1**
(43) Date of publication of application: **09.01.2002**
(21) Application number: 01116210.4
(22) Date of filing: 04.07.2001
(51) Int. Cl.: G06F 17/60

(54) **Loan examination method and loan examination system**

(30) Priority: 07.07.2000 JP 2000207059
(71) Applicant: NEC CORPORATION, Tokyo (JP)
(72) Inventor: Kinoshita, Haruhiko, Minato-ku, Tokyo (JP)
(74) Representative: Betten & Resch

(57) **Abstract**

Information on business activities of an enterprise to be examined is accumulated on an ASP server from a terminal of the enterprise through a network such as the Internet. An examiner such as a financial institution evaluates the activities of the enterprise based on the information on business activities of the enterprise accumulated on the ASP server to examine the enterprise. The examination typically is an examination for determining whether a new loan can be offered to the enterprise.

## Description

### Background of the Invention:

### 1. Field of the Invention:

The present invention relates to a scheme of an examination for lending or loaning money to an enterprise, and more particularly to a system and a method preferably applied to an examination business or the like in which a financial institution previously determines whether it can offer loan or financing.

### 2. Background Art:

When a financial institution finances an enterprise or settles a loan to the enterprise, it performs an examination in advance for determining whether it may offer the loan. In the loan examination, whether the loan can be offered is determined on the basis of information obtained from, for example, (1) inquiries from the financial institution to a company to be examined or an examinee and responses from the examinee to the inquiries, (2) data such as the financial statements already issued by the examinee, (3) exchanges of information on debts of the examinee between the financial institution and another financial institution, (4) assets of the examinee serving as collateral, and (5) visits of the financial institution to the examinee. The information is provided over a computer network, in the form of documents, by telephone, through direct hearings or the like.

When the financial institution determines whether it can offer the loan requested by the examinee, it can refer only to (1) information generally released by the examinee, (2) information on the examinee substantially known to the financial industry, and (3) information provided for the financial institution by the examinee, of the aforementioned information.

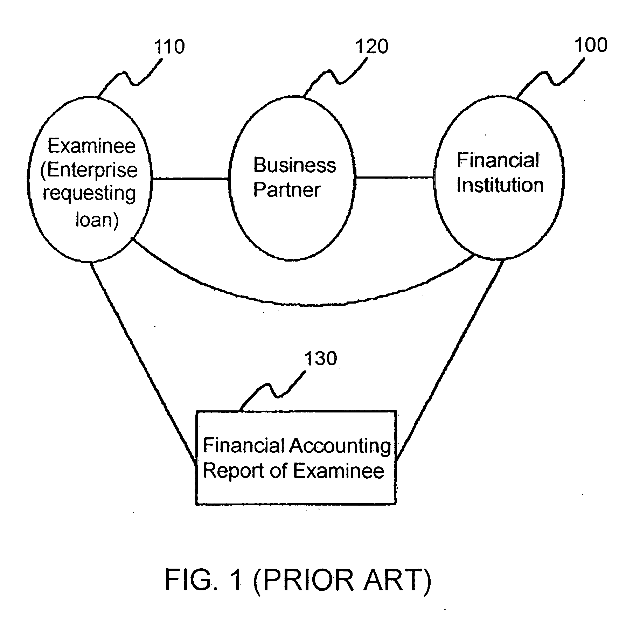

Fig. 1 shows a scheme for a conventional loan examination. Referring to Fig. 1, financial institution 100 collects information by using financial accounting report 130 such as a financial statement of examinee 110 already released by examinee 110, putting directly questions to examinee 110 on a visit thereto and the like to determine whether financial institution 100 can finance examinee 110. In addition, financial institution 100 may visit business partner 120 of examinee 110 without notifying examinee 110 of the visit to check business situations.

In Fig. 1, financial accounting report 130 of examinee 110 is produced by examinee 110 on its own with the help of an auditor, accountant or audit corporation, and released to the outside after receipt of certification by the auditor or accountant in terms of accuracy and validity. Since financial accounting report 130 is produced and released at each term end, examinee 110 produces such a financial accounting report once a year or twice a year, that is, once in the first half and once in the second half of a year, or four times in a year, that is, every three months, depending on company accounting systems varying from one country to another. A financial statement for stock investors is an example of data readily obtained by financial institution 100 as specific data of financial accounting report 130 of examinee 110.

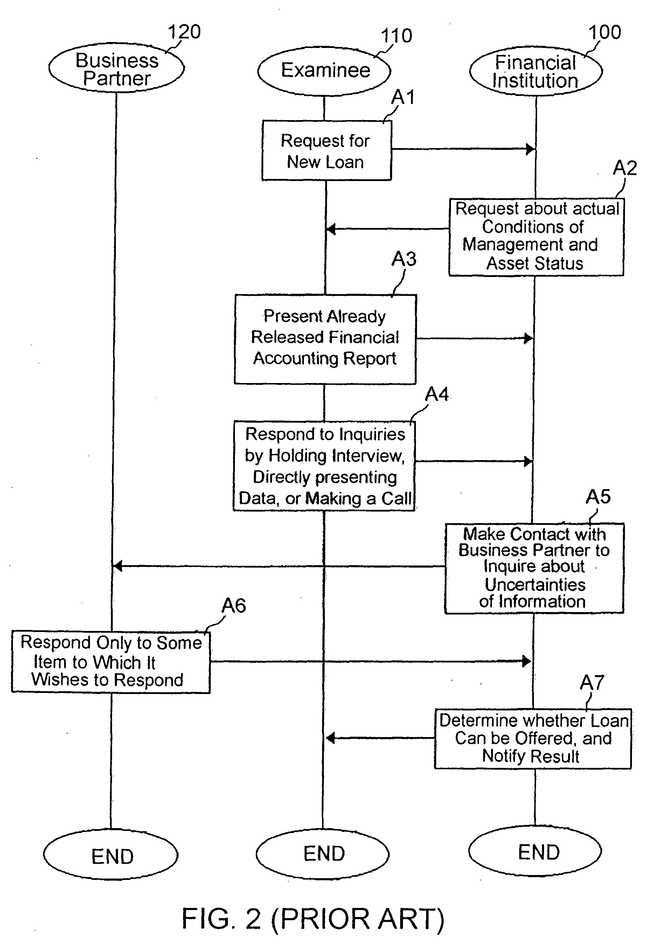

Fig. 2 illustrates a specific procedure of the conventional loan examination. Referring to Fig. 2, a company attempting to obtain financing, that is, examinee 110 makes a request for new loan to financial institution 100 such as a bank as required in business at step A1. Upon receipt of the request for loan, financial institution 100 inquires of examinee 110 which made the request about its actual conditions of management and asset status at step A2. At step A3, examinee 110 presents an already released financial accounting report of examinee 110, for example reports on securities, to financial institution 100. At step A4, examinee 110 responds to the inquiries at step A2 by holding an interview with a member of staff of financial institution 100, directly presenting data, or making a call.

In some cases, at step A5, financial institution 100 makes contact with business partner 120 of examinee 110 to inquire about uncertainties of the information acquired at steps A3 and A4 for confirmation and verification of the information. At step A6, business partner 120 responds only to some items of the inquiries from financial institution 100 to which it wishes to respond.

Finally, at step A7, financial institution 100 determines whether it can offer the loan to examinee 110 by using the information obtained at step A3, A4 and A6 and public information, and notifies examinee 110 of the determination result.

In the conventional loan examination method, however, a problem exists in that the information which the financial institution can referred to at the loan examination is limited to the information generally released by the examinee, the information on the examinee substantially known to the financial industry, and the information provided by the examinee for the financial institution.

The financial institution which desires a more accurate loan examination wishes to obtain variable information in order to analyze the examinee from many aspects referring to business activities during a certain period, expected orders in the next term and the like, although it is difficult to thoroughly carry out that wish. In addition, there is only a poor method for checking whether the contents of the responses of the examinee to the inquiries of the financial institution are true or not. Furthermore, in general, the examinee which is to apply for financing to the financial institution may hide weak points in the actual conditions of management of the company and exaggeratedly explain its strengths.

Since the conventional loan examination method also has a problem of being time-consuming due to the need of manpower to collect the necessary information.

The understanding of accurate and latest conditions of management of the examinee in the financial institution is required for realizing a more accurate finance examination by the financial institution.

### Summary of the Invention:

It is an object of the present invention to provide a method which allows a financial institution to promptly perform a loan examination and enables improved accuracy of the loan examination.

It is another object of the present invention to provide a system which allows a financial institution to promptly perform a loan examination and enables improved accuracy of the loan examination.

In the present invention which achieves the aforementioned objects, information on business activities of an enterprise is collected on an ASP (application service provider) server from a terminal apparatus provided in the enterprise through a network such as the Internet. An examiner such as a financial institution evaluates the activities of the enterprise based on the information accumulated on the ASP server to examine the enterprise. The examination typically is an examination for determining whether financing can be offered to the company.

The above and other objects, features, and advantages of the present invention will become apparent from the following description referring to the accompanying drawings which illustrate examples of preferred embodiments of the present invention.

### Brief Description of the Drawings:

Fig. 1 is a schematic view for explaining a method of a conventional loan examination;
Fig. 2 is a flow diagram illustrating a specific procedure of the conventional loan examination;
Fig. 3 is a block diagram showing a configuration of a loan examination system according to a preferred embodiment of the present invention; and
Fig. 4 is a flow diagram illustrating operations of the system shown in Fig. 3.

### Detailed Description of the Embodiments:

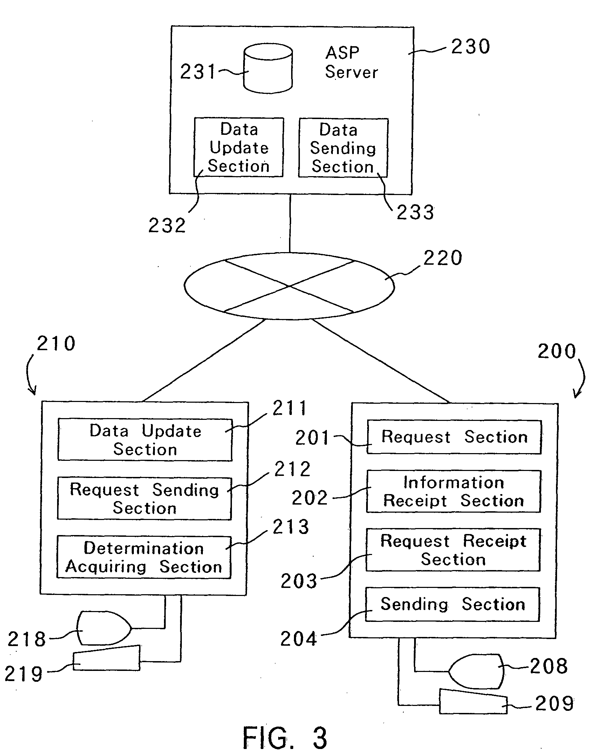

In a preferred embodiment of the present invention, as shown in Fig. 3, terminal 200 is placed in a financial institution, terminal 210 is placed in an enterprise which wishes to obtain a loan, ASP (Application Service Provider) server 230 is operated by the financial institution or an entity holding a commission from the finance institution, and terminals 200, 210, and ASP server 230 are interconnected through network 220. The Internet, for example, is preferably used as network 220.

An enterprise which wishes to obtain a loan is referred to as "an examinee." Such examinees include corporations such as limited companies or corporations, unlimited companies or corporations, general partnerships, associations, medical corporations, eleemosynary corporations such as incorporated schools, and public corporations, and one-man businesses, depending on definitions in corporation laws, civil codes, and commercial laws in various countries.

In the embodiment, information on business activities of an enterprise which wishes to obtain a loan is transmitted from terminal 210 placed in the enterprise to ASP server 230 through network 220 and accumulated on ASP server 230. The accumulated information on business activities is transmitted to terminal 200 of an entity who is to evaluate the enterprise, for example an entity which is to offer loans, in response to a request from the entity. The entity which evaluates the enterprise determines actions for the enterprise by evaluating the activities of the enterprise. When a loan examination is performed, the entity which evaluates the enterprise performs the loan examination based on the evaluation to determine whether the entity can offer the loan to the enterprise. One terminal 210 of the examinee may be provided for the examinee, or a plurality of terminals 210 may be provided for one examinee depending on the scale or the like of the examinee. Specifically, terminal 210 of the examinee may be provided for each office of the examinee, or each of departments such as a finance department, accounts department, sales department, and manufacturing department of the examinee.

In the present invention, ASP server 230 is preferably operated by the entity which evaluates the enterprise. The following description is made assuming that a financial institution itself sets up and operates ASP server 230. ASP server 230 is not open to third parties except the enterprise and the entity which evaluates the enterprise.

A procedure of a loan examination based on the present invention includes the steps of:
recording information on business activities of the examinee on the ASP server from the terminal placed in the examinee;
appending, updating, deleting, viewing the information on business activities recorded on the ASP server by the terminal of the examinee;
transmitting a request for loan from the terminal of the examinee to the terminal of the financial institution;
acquiring the information on business activities of the examinee stored on the ASP server from the terminal of the financial institution; and
determining whether the loan can be offered to the examinee based on the information on business activities of the examinee stored on the ASP server and notifying the terminal of the examinee of the determination result.

A company typically creates a database for managing finance, accounting, marketing, manufacturing and the like of the company. In recent years, the operation of the database for managing finance, accounting, marketing, manufacturing and the like is often committed to an external ASP as part of outsourcing of peripheral activities in the company. Thus, in the present embodiment, a financial institution and the like sets up and operates the ASP server to undertake the database management of finance, accounts, marketing, manufacturing and the like of the examinee as well as perform a loan examination based on information on business activities of the examinee accumulated on the ASP server.

As a result, the financial institution uses the latest information on various business activities of the examinee stored on the ASP server which would not be acquired conventionally as reference information, for example, to determine whether the financial institution settles loan to the company without releasing the information to third parties, thereby achieving improved accuracy of the loan examination. The information on business activities sent to the ASP server from the examinee includes, as an example, information on finance, accounts, marketing, manufacturing and the like of the examinee.

Description is hereinafter made for a loan examination system of the embodiment in detail.

Terminal 200 of the financial institution includes request section 201, information receipt section 202, request receipt section 203, and sending section 204. Request section 201 has the function of making a request to ASP server 230 operated by the financial institution through network 220 for information on business activities of the examinee stored on ASP server 230. Information receipt section 202 has the function of receiving contents sent from ASP server 230 through network 220. Request receipt section 203 has the function of receiving a request for new loan sent from terminal 210 of the examinee through network 220. Sending section 204 has the function of sending the determination result of whether the requested loan can be offered or not to terminal 210 of the examinee through network 220. Terminal 200 of the financial institution further includes display 208 such as a CRT (cathode ray tube) or liquid crystal display (LCD) and input device 209 such as a keyboard or mouse. The information on business activities received from ASP server 230 and the information on the request for new loan from the examinee are displayed on display 208. Request section 201 requests ASP server 230 to send the information on business activities of the examinee through operations of input device 209.

While each of request section 201, information receipt section 202, request receipt section 203, and sending section 204 may be formed of hardware, the processing thereof is typically realized by a program executed on a computer constituting terminal 200 of the financial institution. In this case, the functions of terminal 200 of the financial institution herein described are realized by reading the program from a recording medium having the program recorded thereon such as a magnetic recording medium, optical disc, or semiconductor memory onto the computer constituting terminal 200 of the financial institution before execution of the program, or by downloading the program from a server or the like to the computer constituting terminal 200 of the financial institution through the network before execution of the program on the computer.

Terminal 210 of the examinee includes data update section 211, request sending section 212, and determination acquiring section 213. Data update section 211 is provided for causing ASP server 230 to accumulate information on general business activities such as finance, accounting, sales, manufacturing and the like of the examinee through network 220, and has the functions of instructing ASP server 230 to add, update, or delete the information on business activities of the examinee stored on ASP server 230 and viewing the information on business activities of the examinee stored on ASP server 230. Request sending section 212 has the function of sending a request for new loan to terminal 200 of the financial institution through network 220. Determination acquiring section 213 has the function of acquiring the determination result of whether loan can be offered to the company sent from terminal 200 of the financial institution through network 220. Terminal 210 of the examinee further includes display 218 such as a CRT or liquid crystal display and input device 219 such as a keyboard or mouse. When data update section 211 adds, updates, deletes, or views the information on business activities stored on ASP server 230, the information on business activities is displayed on display 218. The determination result of whether loan can be offered to the company from terminal 200 of the financial institution is also displayed on display 218. Input for adding, updating, deleting or viewing the information on business activities on ASP server 230 by data update section 211 is made through input device 219. Request sending section 212 sends a request for new loan to terminal 200 of the financial institution through operations of input device 219.

While each of data update section 211, request sending section 212, and determination acquiring section 213 may be formed of hardware, the processing thereof is typically realized by a program executed on a computer constituting terminal 210 of the examinee. In this case, the functions of terminal 210 of the examinee herein described are realized by reading the program from a recording medium having the program recorded thereon such as a magnetic recording medium, optical disc, or semiconductor memory onto the computer constituting terminal 210 of the examinee before execution of the program, or by downloading the program from a server or the like to the computer constituting terminal 210 of the examinee through the network before execution of the program on the computer.

ASP server 230 operated by the financial institution includes storage section 231 for storing information on business activities of each examinee, data update section 232, and data sending section 233. Data update section 232 has the functions of storing information on general business activities sent from terminal 210 of the examinee into storage section 231, changing information on business activities stored in storage section 231, or providing information on business activities for terminal 210 of the examinee, in accordance with instructions (for storage, change, or view) from terminal 210 of the examinee. While storage section 231 has information on business activities of a plurality of examinees stored therein, one of the examinees must be prohibited from accessing information on business activities of another examinee. For this reason, data update section 232 also performs access control such that terminal 210 of an examinee can access only information on its own business activities. Data sending section 233 has the function of sending, in response to a request from terminal 200 of the financial institution, requested information on general business activities of the examinee to terminal 200 of the financial institution.

The processing in ASP server 230 is typically performed by a program executed on a server computer. Storage section 231 is realized as a mass storage unit provided on the server computer. Data update section 232 and data sending section 233 are realized by a program which performs processing therefor. The functions of ASP server 230 herein described are realized by reading the program from a recording medium having the program recorded thereon such as a magnetic recording medium, optical disc, or semiconductor memory onto the server computer constituting ASP server 230 before execution of the program, or by downloading the program from a server or the like to the server computer constituting ASP server 230 through the network before execution of the program on the computer.

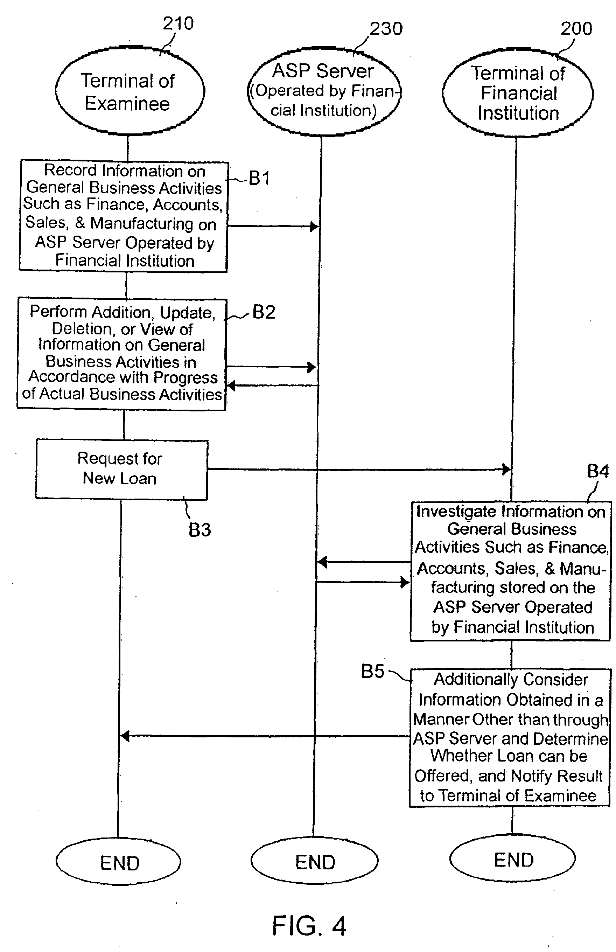

Next, the procedure of the loan examination according to the embodiment is described with reference to Fig. 4. The following description is made assuming that network 220 is the Internet.

At step B1, employees in departments such as a finance department, accounts department, sales department, and manufacturing department of the examinee record, as their jobs, information on general business activities in the past on ASP server 230 operated by the financial institution through network 220 by using terminal 210 of the examinee placed in the respective departments. At this point, each employee in each department performs the recording as a task on an EDP (Electronic Data Processing) environment of his or her own company without particular consciousness of the location or operator of ASP server 230. Each employee in each department of the examinee adds information on current general business activities to ASP server 230 through network 220 one by one as his or her job at the proper time of update by using terminal 210 of the examinee placed in each department.

At step B2, each employee in each department of the examinee updates, deletes, or views information already stored on ASP server 230 as required in business of each department. At this point, each employee in each department performs the update, deletion, or view of the information as a task on an EDP environment of his or her own company without particular consciousness of the location or operator of ASP server 230.

Assume herein that a motivation for requesting new loan occurs in the examinee. In response thereto, at step B3, a person authorized to apply for loan in the examinee sends a request for new loan to terminal 200 of the financial institution through network 220 from terminal 210 of the examinee.

At step B4, upon receipt of the request for a new loan, a person in charge in the financial institution views the information on general business activities such as finance, accounting, sales, and manufacturing of the examinee stored on ASP server 230 through network 220 from terminal 200 of the financial institution to perform a loan examination. At this point, data usable for the loan examination by the financial institution can include not only information scheduled to be included in a financial accounting report but also a wide variety of information on business activities such as finance, accounting, sales, and marketing. It is thus possible to use predicted performance of the company in the future such as sales schedules from the next term onward as a factor in the determination in the loan examination. At step B5, the person in charge in the financial institution performs a further loan examination by considering information on the examinee obtained in a manner other than through ASP server 230 such as known information to make a final determination of whether the loan can be offered, and notifies terminal 210 of the examinee of the determination result of whether the loan can be offered.

As described above, according to the embodiment, the information on various business activities of the examinee, which could not be acquired conventionally by the financial institution, is stored on ASP server 230. The financial institution does not release the information on various business activities stored on ASP server 230 to the public but exclusively uses the information as reference information for determining whether it can offer the loan to the examinee. It is thus possible to realize improved accuracy of the loan examination in the financial institution.

According to the system, the financial institution can directly acquire grouped and correct information on the examinee in a desired form and at a desired time. Thus, the number of man-hours of employees is reduced in the financial institution and the examinee involved in the loan examination to allow a reduction in time taken for the examination as compared with the conventional examination method when the same level of accuracy of the loan examination as the conventional method is maintained.

In addition, the examinee capable of presenting the information on business activities to the financial institution by using this system is thought to be regarded in the market as a company with no fraud, high clearness, and high credibility of a financial accounting report. Thus, it is expected that stocks, bonds and the like of the examinee are more highly regarded in the market.

While the aforementioned embodiment has been described with an example of a company being financed, a target for loan is not limited to such a company, and the system is applicable to various enterprises. The present invention is also applicable to a system for management diagnosis such as management analysis of an enterprise. In other words, the present invention is not limited to the configuration of the aforementioned embodiment, and it goes without saying that various changes and modifications which may be made by those skilled in the art within the range of the present invention defined by the appended claims are included.

## Claims

1. An examination method comprising the steps of:
storing information on business activities of an enterprise on an ASP (Application Service Provider) server from a terminal of said enterprise through a network;
providing said information on business activities of said enterprise accumulated on said ASP server for an examiner; and
evaluating activities of said enterprise based on said information on business activities provided for said examiner.

2. The examination method according to claim 1,
wherein said examination is an examination for determining whether a loan can be offered to said enterprise.

3. An examination method comprising the steps of:
transmitting information on business activities of an enterprise from a terminal of said enterprise to an ASP (Application Service Provider) server through a network;
accumulating said information on business activities of said enterprise on said ASP server;
transmitting said information on business activities of said enterprise accumulated on said ASP server to a terminal of an examiner based on a request from said examiner, said examiner being to perform an examination of said enterprise; and
outputting said information on business activities of said enterprise on said terminal of said examiner,
wherein said information on business activities of said enterprise accumulated on said ASP server is not open to a third party except said enterprise and said examiner, and said examiner evaluates activities of said enterprise based on said information on business activities transmitted to said terminal of said examiner to perform an examination of said enterprise.

4. The examination method according to claim 3,
wherein said ASP server is operated by said examiner.

5. The examination method according to claim 4,
wherein said examination is an examination for determining whether a loan can be offered to said enterprise.

6. A loan examination method comprising the steps of:
recording information on business activities of an examinee on an ASP (Application Service Provider) server operated by a financial institution from a terminal of said examinee, said examinee being a company, corporation or enterprise to be examined;
performing at least one of addition, update, deletion, and view of said information on business activities recorded on said ASP server from said terminal of said examinee;
transmitting a request for loan from said terminal of said examinee to a terminal of said financial institution;
acquiring said information on business activities of said examinee stored on said ASP server through said terminal of said financial institution; and
determining whether said loan can be offered to said examinee based on said information on business activities of said examinee stored on said ASP server to notify said terminal of said examinee of the determination result.

7. A loan examination method, comprising the steps of:
recording information on general business activities regarding at least one of finance, accounting, sales, and manufacturing of an examinee on an ASP (Application Service Provider) server operated by a financial institution from a terminal of said examinee, said examinee being a company, corporation or enterprise to be examined;
performing addition, update, deletion, or view of said information on business activities on said ASP server from said terminal of said examinee in accordance with progress of actual business activities;
transmitting a request for new loan from said terminal of said examinee to a terminal of said financial institution;
closely investigating said information on general business activities regarding at least one of finance, accounting, sales, and manufacturing of said examinee stored on said ASP server from said terminal of said financial institution; and
determining whether said loan can be offered to said examinee based on information obtained by said close investigation to notify said terminal of said examinee of the determination result.

8. An ASP (Application Service Provider) server operated by an examiner who is to perform an examination of an enterprise, said ASP server comprising:
means for receiving information on business activities of said enterprise to be examined transmitted from a terminal of said enterprise through a network; and
means for accumulating said received information on business activities; and
means for transmitting said accumulated information on business activities of said enterprise to a terminal of said examiner through said network based on a request transmitted from said terminal of said examiner through said network,
wherein said information on business activities of said enterprise accumulated on said ASP server is not open to a third party except said enterprise and said examiner.

9. A loan examination system, comprising:
a communication network;
a terminal of a financial institution connected to said communication network;
a terminal of an examinee connected to said communication network, said examinee being a company, corporation or enterprise to be examined; and
an ASP (Application Service Provider) server connected to said communication network and operated by said financial institution;
said terminal of said financial institution including:
means for making a request to said ASP server for predetermined information on business activities of said examinee stored on said ASP server to receive said information on business activities;
means for receiving a request for loan from said terminal of said examinee; and
means for returning a result of a loan examination to said terminal of said examinee,
said terminal of said examinee including:
means for recording said predetermined information on business activities of said examinee on said ASP server, updating said predetermined information on business activities of said examinee recorded on said ASP server, deleting said predetermined information on business activities of said examinee recorded on said ASP server, and viewing said information on business activities of said examinee from said ASP server;
means for transmitting the request for loan to said terminal of said financial institution; and
means for receiving the result of the loan examination from said terminal of financial institution,
said ASP server including:
means for receiving said information on business activities of said examinee transmitted from said terminal of said examinee, providing said information on business activities of said examinee for said terminal of said examinee based on a request from said terminal of said examinee, and performing record, update, or deletion of said information on business activities of said examinee based on an instruction from said terminal of said examinee;
means for accumulating said received information on business activities; and
means for providing, based on a request from said terminal of said financial institution, requested information on business activities of said examinee for said terminal of said financial institution.

10. A loan examination system, comprising:
a communication network;
a terminal of a financial institution connected to said communication network;
a terminal of an examinee connected to said communication network, said examinee being a company, corporation or enterprise to be examined; and
an ASP (Application Service Provider) server connected to said communication network and operated by said financial institution;
said terminal of said financial institution including:
means for viewing information on general business activities regarding at least one of finance, accounting, sales, and manufacturing of said examinee stored on said ASP server;
means for receiving a request for new loan from said terminal of said examinee; and
means for returning a result of a loan examination to said terminal of said examinee,
said terminal of said examinee including:
means for recording information on general business activities regarding at least one of finance, accounting, sales, and manufacturing of said examinee on said ASP server, updating on said ASP server said information on general business activities recorded on said ASP server, deleting on said ASP server said information on general business activities recorded on said ASP server, and viewing from said ASP server said information on general business activities recorded on said ASP server;
means for transmitting the request for new loan to said terminal of said financial institution; and
means for receiving the result of the loan examination from said terminal of said financial institution,
said ASP server including:
means for storing said information on general business activities of said examinee transmitted from said terminal of said examinee;
means for performing record, update, or deletion of said information on general business activities of said examinee in said storing means based on an instruction from said terminal of said examinee, and reading said information on general business activities of said examinee from said storing means based on a request from said terminal of said examinee to transmit said read information to said terminal of said examinee; and
means for reading said information on general business activities of said examinee requested from said terminal of said financial institution from said storing means to transmit said read information to said terminal of said financial institution.

11. A recording medium readable by a computer connected to an ASP (Application Service Provider) server and a terminal of an examinee through a network, said examinee being a company, corporation or enterprise to be examined, said recording medium having a program recorded thereon causing said computer to perform the processing of:
viewing predetermined information on business activities of said examinee stored on said ASP server;
receiving a request for loan from said terminal of said examinee; and
returning a result of a loan examination to said terminal of said examinee.

12. A recording medium readable by a computer connected to a terminal of a financial institution and an ASP (Application Service Provider) server through a network, said recording medium having a program recorded thereon causing said computer to perform the processing of:
recording predetermined information on business activities of an examinee on said ASP server, said examinee being a company, corporation or enterprise to be examined;
updating said predetermined information on business activities of said examinee recorded on said ASP server;
deleting said predetermined information on business activities of said examinee recorded on said ASP server;
viewing said information on business activities of said examinee from said ASP server;
transmitting a request for loan to said terminal of said financial institution; and
receiving a result of a loan examination from said terminal of said financial institution.

13. A recording medium readable by a computer connected to a terminal of a financial institution and a terminal of an examinee through a network, said examinee being a company, corporation or enterprise to be examined, said recording medium recording a program recorded thereon for performing the processing of:
receiving information on business activities of said examinee transmitted from said terminal of said examinee to accumulate said received information on a storage device;
reading and transmitting from said storage device said information on business activities of said examinee requested from said terminal of said financial institution or said terminal of said examinee; and
performing record, update, or deletion of said information on business activities of said examinee in said storage device based on an instruction from said terminal of said examinee.

14. A computer program comprising executable program code for performing the method of one of claims 1 to 7.
